# EUROPEAN PATENT SPECIFICATION

(11) **EP 2 979 573 B1**
(45) Date of publication and mention of the grant of the patent: **19.09.2018**
(21) Application number: 15178450.1
(22) Date of filing: 27.07.2015
(51) Int. Cl.: A45D 40/16, B23B 1/00, B23B 3/00

(54) **METHOD FOR THE SURFACE WORKING OF A COSMETIC PRODUCT**
VERFAHREN ZUR OBERFLÄCHENBEARBEITUNG EINES KOSMETIKPRODUKTS
PROCÉDÉ POUR LE TRAITEMENT DE LA SURFACE D'UN PRODUIT COSMÉTIQUE

(30) Priority: 31.07.2014 IT MI20141406
(43) Date of publication of application: 03.02.2016
(73) Proprietor: Chromavis S.p.A., 20122 Milano (IT)
(72) Inventor: LARCERI, Nicolò, 20077 Melegnano (MI) (IT); MORONI, Fabio, 26010 Ripalta Cremasca (CR) (IT)
(74) Representative: Vanosi, Adelio Valeriano

(56) References cited:
- EP-A1- 1 871 335
- EP-A1- 2 204 106
- EP-A1- 2 220 959
- WO-A1-2004/103690
- JP-A- 2004 321 410
- JP-A- 2009 269 878
- US-A- 3 365 989
- US-A- 5 086 791
- US-A- 5 315 905
- US-A1- 2008 251 096
- US-A1- 2009 126 207

## Description

The present invention relates to a surface working method and device of a cosmetic make-up product.

In particular, it relates to a surface working method of a cosmetic product of the baked type, with rounded or flat surface, and to a cosmetic product obtained by such a method.

Currently, cosmetics products for make-up, and specifically of baked products, are produced by depositing a paste on a base. Often more pastes of different colors are deposited in different areas on the same base, so as to obtain a multicolored look on the finished product.

Once the positioning step of the paste(s) on the base has been completed, following a preforming carried out in a die, the whole is dried in the furnace.

After drying, the product surface is cleaned by abrasion with a sponge.

Cleaning with a sponge is intended to remove from the surface the outer layer of the product having a dried or cracked crust after drying. In this way, therefore, most imperfections generated in the previous working steps are removed to obtain a surface of the cosmetic make-up product with a smooth and neat appearance.

The manual cleaning step is very expensive because it takes a long time. Moreover, it must be carried out by very experienced and capable personnel.

In fact, it should be noted that the pressure manually made on a substantially friable surface such as that of the cosmetic make-up product is never homogeneous. Therefore, a lot of practice and skill is required to obtain a quality result through this method.

However, it should be noted that even though the cleaning is carried out by extremely experienced personnel, every cosmetic product, after cleaning, has a shape slightly different from the other. In fact, it is impossible to obtain a homogeneous result manually removing a surface layer of dry paste from the cosmetic product. Moreover, the cosmetic products made using this technique also differ in the weight, in addition to shape. In fact, the manual working is unable to ensure a homogeneous removal of the excess cosmetic product to obtain a certain weight.

This creates problems of packaging of the finished product, which, as known, takes place in containers (usually plastic) obtained by molding, and therefore, all perfectly identical. There is therefore the possibility that some cosmetic products must be discarded as they are too low or too high to be accommodated in the final containers. Many products are also discarded because their weight is less than a certain limit.

Another problem that occurs, especially in multicolor cosmetic products, is that the manual cleaning operation using a sponge slightly mixes the colors on the surface, thus making the final product lose definition.

US 2009/126207-A1, WO 2004/103690-A1, JP 2004 321410 A and US 5315905 A describe a surface working method of a cosmetic make-up product known in the art.

The object of the present invention is to provide a surface working method of a cosmetic make-up product which overcomes the mentioned prior art drawbacks.

A further object of the present invention is to reduce the working time of the cosmetic products, thereby minimizing the costs thereof.

Yet another object of the invention is to provide a working method which makes the shape and the final weight of the cosmetic products for make-up obtained therewith more uniform, so as to easily package them in standardized containers, thus avoiding waste.

Last but not least, an object of the invention is to provide a surface working method that allows obtaining an excellent definition on a multicolor product.

These and other objects are achieved by a surface working method of a cosmetic make-up product according to the appended claims.

Further features and advantages of the invention will become apparent from the description of an example of a device, shown in the accompanying drawings, in which:
figure 1A is a perspective view of a surface working device of a cosmetic product according to the present description, the device not being part of the claimed invention;
figure 1B is a view of an enlarged detail of the device in figure 1;
figure 2 is a front view of the device in figure 1;
figure 3 is a side view of the device in figure 1;
figures 4A, 4B and 4C show the sequential movement steps of some cosmetic products through various working positions of the device in figure 1;
figures 5A and 5B show a working start and end step of a cosmetic product, respectively;
figure 6 is a simplified side view of a cosmetic product during working carried out with the device in figure 1; and
figure 7 is an enlarged view of a part of figure 6.

With reference to the above figures, a surface working device of a cosmetic product 2 is shown, indicated as a whole with reference numeral 1.

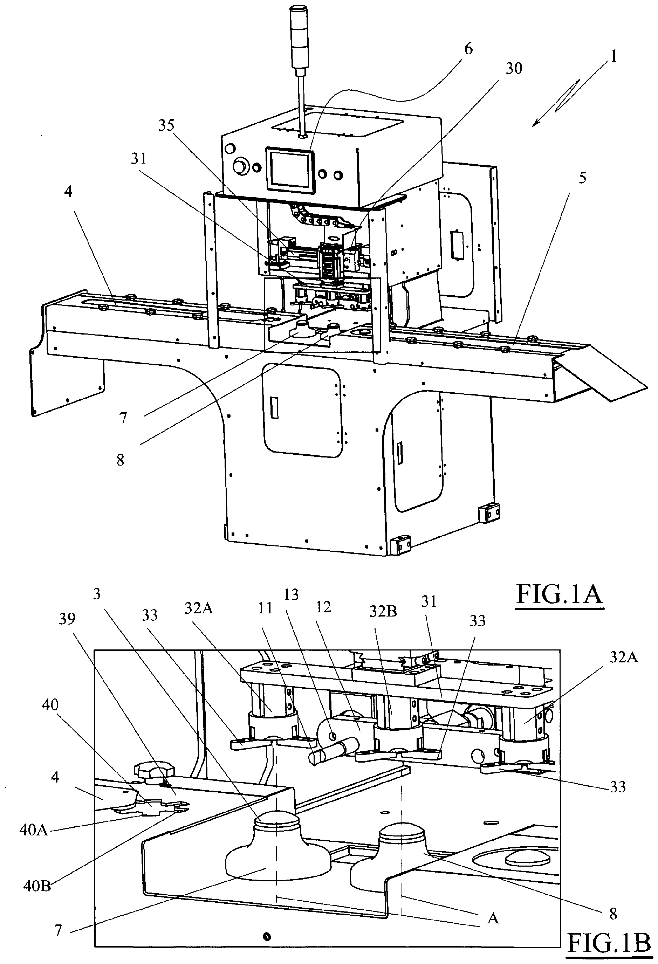

The device, clearly visible in figure 1, comprises a frame 3 which supports a loading conveyor belt 4 and an unloading conveyor belt 5. The conveyor belts are driven by suitable motors, not shown, but controlled by a control unit 6.

A first 7 and a second rotating base 8 are provided between the conveyor belts, in a dedicated seat 9 accessible from the outside.

The first base 7 rotates (driven in rotation by a suitable motor, not shown) about a axis of rotation A, preferably vertical. In particular, it is provided with blocking means 10 of a cosmetic product which is placed on top of it during a working step of the cosmetic product. The cosmetic product is placed with a circular axis of symmetry thereof coincident with axis A.

In the proximity of the first rotating base, as clearly visible in figure 1B, a cutting tool 11 is present, associated to movement means adapted to move it along the surface of the cosmetic product at least when said first rotating base is in rotation, so as to work the surface of the cosmetic product, removing at least a surface part thereof.

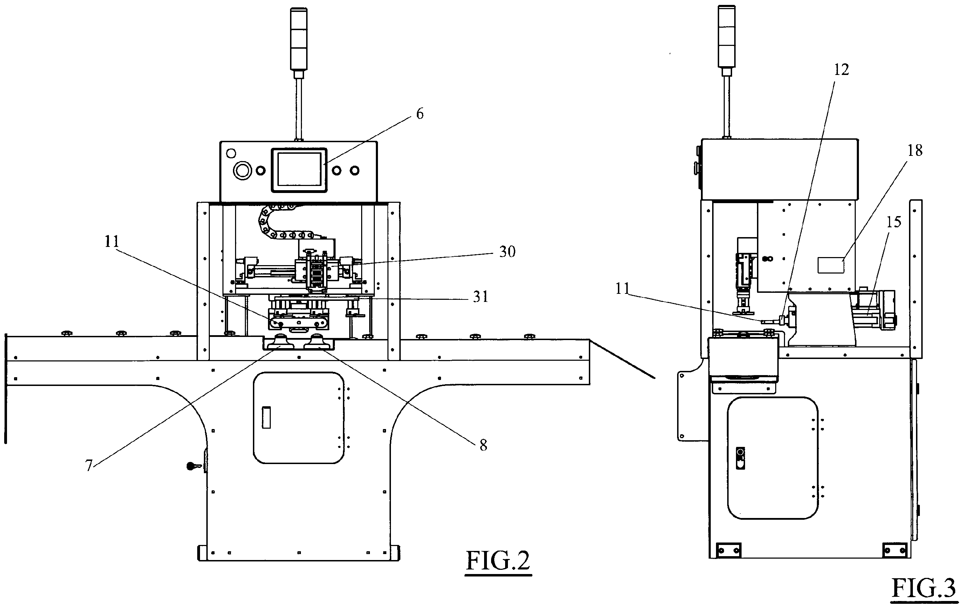

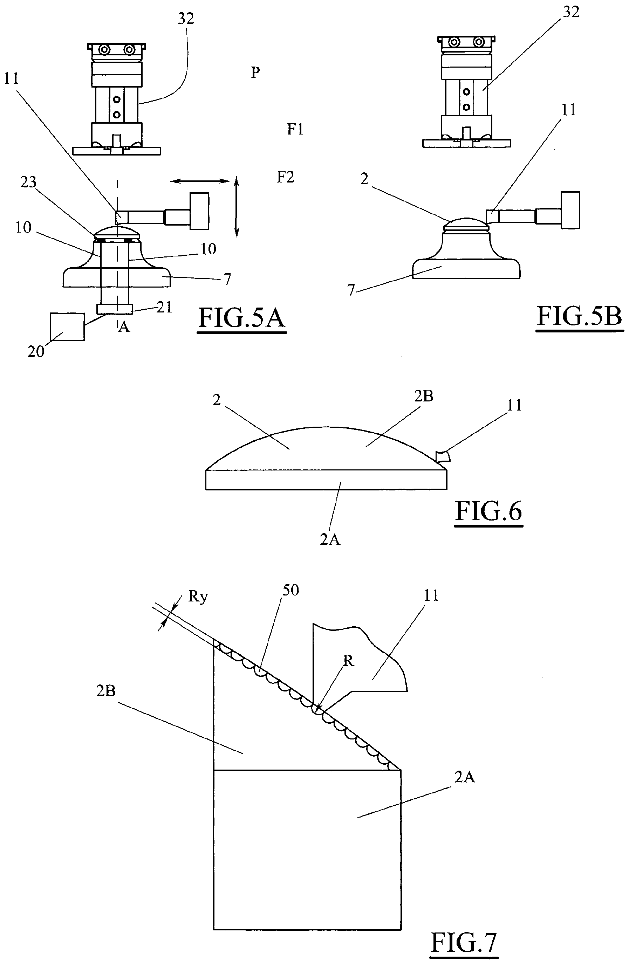

Preferably, the cutting tool 11 is supported by a plate 12 sliding on guides 13 perpendicular to axis A which allow the same to carry out a movement along arrows F1 in figure 5A. Such a movement is controlled by the control unit and carried out using a stepper motor 15 visible in figure 3.

The stepper motor 15, plate 12 and guides 13 form a block supported by further guides 16 which allow a movement to the cutting tool along direction F2 in figure 5A. Such a movement is carried by an actuator 18, simply schematized in figure 3 but also controlled by the control unit 6.

In the practice, the movement means described above allow the cutting tool 11 to move under the control of the control unit 6, anywhere above the first rotating base 7, in the direction of arrows F1 and F2. The movement of the cutting tool takes place within a plane P, containing the rotation axis A of the first rotating base 7. Therefore the movement of the cutting tool 11 takes place along a trajectory lying in the plane P containing the rotation axis of the first rotating base 7, and the axis of symmetry of the make-up cosmetic product.

Figure 5A schematizes some channels 10 that run through the first rotating base 7 and are connected to a vacuum source 20 (e.g. a vacuum pump, a vacuum vessel or any other means adapted to create a suction force sufficient to keep the product in place during its rotation and working), advantageously through valve means 21. Each of channels 10 has an opening placed on the surface of the first rotating base 7 to which a sealing means 23 is associated, which preferably has an overturned suction or gasket shape. It is also possible to provide for a single large suction cup that is coupled to the base of the cosmetic product.

As can be seen from the figures, the device comprises a second rotating base 8, structurally identical to the first one, which rotates synchronized with the first one. A blowing nozzle (not shown for simplicity) is advantageously provided above it which blows air onto the surface of the cosmetic product just worked on the first rotating base 7.

Above the first and the second rotating base a carriage 30 is present, sliding on its own guide 35, which supports a cross member to which three manipulators 32A, 32B, 32C are attached, each comprising three mobile fingers 33 for gripping the cosmetic product and moving it between the loading conveyor belt 4, the first 7 and the second rotating base 8 and the unloading conveyor belt 5.

As can be seen in figure 1B, the first conveyor belt 4 flows on a loading plane 39 associated with it. It is provided with a star-shaped opening 40 which defines windows 40A, 40B which allow the mobile fingers 33 to grip the cosmetic product, preferably at a base thereof.

To conclude the description it should be said that at least above the first rotating base 7, or at least in the area surrounding it, means of forced aspiration are provided (which are not shown) arranged so as to aspirate the cosmetic dust produced during the working.

The operation of the device described is clear to the man skilled in the art and is substantially as follows.

An operator loads a plurality of cosmetic make-up products 2 on the first conveyor belt.

The cosmetic products for make-up 2 (fig. 6) have a base 2A on which a make-up product 2B is placed. By way of example, the cosmetic make-up product 2 is of the baked type. The make-up product 2B is a cosmetic paste dried in a furnace and therefore has a surface layer with cracks and imperfections. It should be noted that during the steps before the baking, the cosmetic paste 2B has been deposited on the base in excess to what will make the final cosmetic product. A part of the excess cosmetic paste will be removed through the device described herein.

The first conveyor belt 4 moves bringing the products 2 towards the first rotating base 7. When a cosmetic product is deposited above the star-shaped opening 40, a sensor detects the presence thereof and the conveyor belt is stopped.

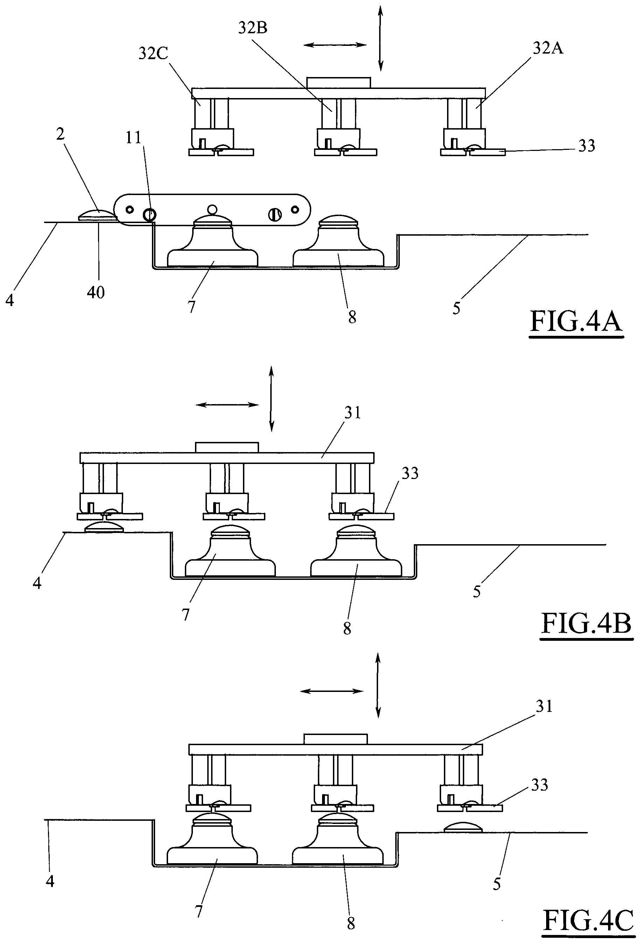

The configuration is now that shown in figure 4A, where the cosmetic product placed above the first rotating base 7 is being worked. It should be noted that the working of product 2 and the movement of the first conveyor belt can also be simultaneous for increasing productivity. In any case, they all are regulated in an optimized manner by the control unit 6.

At the end of the working of the product positioned in figure 1 above the first rotating base 7, the cross member 31 and therefore all the manipulators, move to the left and go down above the cosmetic products, as shown in figure 4B. In this position, fingers 33 of each manipulator tighten around the bases of the three underlying cosmetic products, namely that placed over the star-shaped opening 40, that placed above the first rotating base 7 and placed above the second rotating base 8.

Once the three cosmetic products have been gripped, the cross member 31 rises slightly and moves to the right in figure 4B; when each manipulator 32A, 32B and 32c is in position, the cross member lowers and the fingers open, dropping the cosmetic product into position.

In the first rotating base 7, the valve means 21 are opened and channels 10 are thus under depression, so that the cosmetic product is temporarily fixed to the first rotating base 7 due to the suction effect.

This also happens with respect to the second rotating base 8.

Meanwhile, the cosmetic product previously present on the second rotating base 8 is now positioned on the second conveyor belt which, by activating, moves it away from the working area.

The rotating bases are operated in rotation, thus dragging also the cosmetic products placed thereon in rotation about an axis A, coincident with that of symmetry of products 2. In the embodiment shown, such an axis is arranged vertically.

During the rotation of the cosmetic product, the cutting tool 11 is moved above the surface thereof so as to remove at least part of said surface, thus giving it a predetermined shape.

Figure 5 shows that the motion of tool 11 begins in the proximity of axis A and ends at the edge of the base 2A removing, by virtue of the rotational motion of the rotating base, all that part of make-up product that is located above the line defined by the tool trajectory. Actually, the cosmetic product is worked through a turning. The movement of the cutting tool 11 is radial with respect of the cosmetic make up-product 2, and with respect of the first rotating base 7.

Advantageously, the cutting tool 11 moves on a single plane P. Its motion may be along a curved trajectory as in the case described, or along a straight trajectory or along any other trajectory, such as wavy.

Moreover, the tool may be moved above the product surface by a fixed distance at each revolution of the cosmetic product (feed).

Such a working creates a groove 50 on the surface of the cosmetic product with a peak-to-trough Ry in the range between 30 and 60 micron. If the movement of the first rotating base is synchronized with the movement of the cutting tool 11, such a groove is a spiral. In any case, however, the surface of the cosmetic product is evenly covered with such grooves since the tool passes over its entire surface to suitably finish it. Of course, both in case there is a single groove and in case the grooves are uniformly distributed on the surface of the piece, they have such a small depth that cannot be seen with the naked eye, but only with a microscopic analysis. In fact, the surface is, both to the eye and to the touch, perfectly smooth and without ridges or troughs.

## Claims

1. A surface working method of a cosmetic make-up product (2) comprising the step of setting the cosmetic make-up product (2) in rotation about an axis of symmetry (A) thereof and, simultaneously, moving a cutting tool (11) above the surface of the cosmetic make-up product (2) on a trajectory lying in a plane (P) containing the axis of symmetry (A) so as to remove at least a part of said surface, thus giving the surface a predetermined shape, **characterized in that** the make-up product (2) is worked through a turning whereby the make-up product (2) is set in rotation on a first rotating base (7) and the trajectory of the cutting tool is radial with respect to the cosmetic make-up product (2) and with respect to the first rotating base (7).

2. The method of the preceding claim, wherein the motion of the tool (11) takes place on a single plane (P), and/or wherein the motion of the tool (11) is straight, and/or wherein the tool (11) is moved above the surface of the cosmetic make-up product (2) at a fixed distance for each revolution of the product.

3. The method of claim 1, comprising the steps of blocking the cosmetic make-up product (2) to the first rotating base (7) about a preferably vertical rotation axis (A) with blocking means (10, 21, 20) of said cosmetic make-up product, and moving the cutting tool (11) along a trajectory lying in a plane containing the vertical rotation axis (A), over the surface of the cosmetic product at least when said first rotating base (7) is in rotation, so as to work the surface of the product by removing at least a surface part thereof, the trajectory of the the cutting tool (11) being radial with respect to the cosmetic make-up product (2) and with respect to the first rotating base (7).

4. The method of claim 1, wherein the cosmetic make-up product (2) is blocked to the first rotating base (7) by at least a channel (19) provided with an opening positioned on the surface of said first rotating base (7), and connected to a vacuum source (20), and/or wherein the opening of the channel is associated to sealing means for coupling with said cosmetic make-up product.

5. The method of claim 1, wherein a second rotating base (8) is present for blowing a worked cosmetic product and/or for a second working thereof and/or wherein the rotation of the first rotating base (7) is synchronized with the rotation of the second base (8).

6. The method of claim 1, wherein the cosmetic make-up product (2) is moved by a loading conveyor belt (4) and by an unloading conveyor belt (5), and by positioning means (32A, 32B, 32C, 30, 33) of said cosmetic product able to move the cosmetic product at least between the loading conveyor belt (4), the first rotating base (7) and the unloading conveyor belt (5).

7. The method of claim 6, wherein said positioning means comprise three handlers (32A, 32B, 32C), each fixed to a common cross member (30) and comprising three mobile fingers (33) for gripping the cosmetic make-up product (2).

8. The method of claim 6, wherein the loading conveyor belt (4) is associated to a loading plane provided with windows (40) enabling the mobile fingers (33) to grip the cosmetic product.

9. The method of the preceding claim, wherein forced aspirating means are provided, arranged above the first rotating base (7), so as to aspirate cosmetic dust produced during the working.

10. A cosmetic product obtained by the method of claim 1 or 2, exhibiting, on a surface thereof, a groove having a peak-to-trough depth comprised between 30 and 60 µm , and in which such a groove is spiral-shaped, and/or wherein the surface of the cosmetic product is homogeneously covered with such grooves.

## Patentansprüche

1. Verfahren zur Oberflächenbearbeitung eines kosmetischen Make-up-Produkts (2), umfassend den Schritt des in Rotation Versetzens des kosmetischen Make-up-Produkts (2) um eine Symmetrieachse (A) davon und gleichzeitigen Bewegens eines Schnittwerkzeugs (11) über die Oberfläche des kosmetischen Make-up-Produkts (2) auf einer in einer Ebene (P), die die Symmetrieachse (A) enthält, liegenden Bahn, um mindestens einen Teil der Oberfläche zu entfernen und der Oberfläche so eine vorgegebene Form zu geben, **dadurch gekennzeichnet, dass** das Make-up-Produkt (2) durch eine Biegung bearbeitet wird, wodurch das Make-up-Produkt (2) auf einer ersten Rotationsbasis (7) in Rotation versetzt wird und die Bahn des Schnittwerkzeugs radial bezüglich des kosmetischen Make-up-Produkts (2) und bezüglich der ersten Rotationsbasis (7) ist.

2. Verfahren nach dem vorstehenden Anspruch, wobei die Bewegung des Werkzeugs (11) auf einer einzigen Ebene (P) stattfindet und/oder wobei die Bewegung des Werkzeugs (11) gerade ist und/oder wobei das Werkzeug (11) über der Oberfläche des kosmetischen Make-up-Produkts (2) in einem festen Abstand für jede Umdrehung des Produkts bewegt wird.

3. Verfahren nach Anspruch 1, umfassend die Schritte des Blockierens des kosmetischen Make-up-Produkts (2) zur ersten Rotationsbasis (7) um eine vorzugsweise vertikale Rotationsachse (A) mit Blockiermitteln (10, 21, 20) des kosmetischen Make-up-Produkts, und des Bewegens des Schnittwerkzeugs (11) entlang einer in einer die vertikale Rotationsachse (A) enthaltenden Ebene liegenden Bahn über die Oberfläche des kosmetischen Produkts, mindestens wenn sich die erste Rotationsbasis (7) in Rotation befindet, um die Oberfläche des Produkts durch Entfernen mindestens eines Oberflächenteils davon zu bearbeiten, wobei die Bahn des Schnittwerkzeugs (11) radial bezüglich des kosmetischen Make-up-Produkts (2) und bezüglich der ersten Rotationsbasis (7) ist.

4. Verfahren nach Anspruch 1, wobei das kosmetische Make-up-Produkt (2) zur ersten Rotationsbasis (7) durch mindestens einen mit einer an der Oberfläche der ersten Rotationsbasis (7) positionierten Öffnung versehenen Kanal (19) blockiert und mit einer Vakuumquelle (20) verbunden ist und/oder wobei die Öffnung des Kanals Dichtungsmitteln zur Kopplung mit dem kosmetischen Make-up-Produkt verbunden ist.

5. Verfahren nach Anspruch 1, wobei eine zweite Rotationsbasis (8) zum Blasen eines bearbeiteten kosmetischen Produkts und/oder für eine zweite Bearbeitung davon vorhanden ist und/oder wobei die Rotation der ersten Rotationsbasis (7) mit der Rotation der zweiten Basis (8) synchronisiert ist.

6. Verfahren nach Anspruch 1, wobei das kosmetische Make-up-Produkt (2) durch ein Beladetransportband (4) und ein Entladetransportband (5) und durch Positionierungsmittel (32A, 32B, 32C, 30, 33) des kosmetischen Produkts bewegt wird, die in der Lage sind, das kosmetische Produkt mindestens zwischen dem Beladetransportband (4), der ersten Rotationsbasis (7) und dem Entladetransportband (5) zu bewegen.

7. Verfahren nach Anspruch 6, wobei die Positionierungsmittel drei Handhaber (32A, 32B, 32C) umfassen, die jeweils an einem gemeinsamen Querelement (30) befestigt sind und drei mobile Finger (33) zum Greifen des kosmetischen Make-up-Produkts (2) umfassen.

8. Verfahren nach Anspruch 6, wobei das Beladetransportband (4) mit einer Beladeebene verbunden ist, die mit Fenstern (40) versehen ist, die es den mobilen Fingern (33) ermöglichen, das kosmetische Produkt zu greifen.

9. Verfahren nach dem vorstehenden Anspruch, wobei Zwangsansaugmittel bereitgestellt sind, die oberhalb der ersten Rotationsbasis (7) angeordnet sind, um bei der Bearbeitung erzeugten kosmetischen Staub anzusaugen.

10. Kosmetisches Produkt, das nach dem Verfahren nach Anspruch 1 oder 2 erhalten wird und auf einer Oberfläche davon eine Rille mit einer Tiefe zwischen Spitze und Sohle zwischen 30 und 60 µm aufweist, und wobei eine solche Rille spiralförmig ist und/oder wobei die Oberfläche des kosmetischen Produkts mit solchen Rillen gleichmäßig bedeckt ist.

## Revendications

1. Méthode de travail des surfaces d'un produit cosmétique de maquillage (2) comprenant l'étape de mise en rotation du produit cosmétique de maquillage (2) autour de son axe de symétrie (A), et de déplacement simultanément d'un outil de coupe (11) au-dessus de la surface du produit cosmétique de maquillage (2) sur une trajectoire située dans un plan (P) contenant l'axe de symétrie (A) de façon à enlever au moins une partie de ladite surface, en donnant à la surface une forme prédéterminée, **caractérisée en ce que** le produit cosmétique de maquillage (2) est travaillé au cours d'une rotation, le produit cosmétique de maquillage (2) étant mis en rotation sur une première base rotative (7), et la trajectoire de l'outil de coupe étant radial relativement au produit cosmétique de maquillage (2) et relativement à la première base rotative (7).

2. Méthode selon la revendication précédente, le mouvement de l'outil (11) ayant lieu sur un plan unique (P) et/ou le mouvement de l'outil (11) étant droit, et/ou l'outil (11) étant déplacé au-dessus de la surface du produit cosmétique de maquillage (2) à une distance fixe pour chaque tour du produit.

3. Méthode selon la revendication 1, comprenant les étapes de blocage du produit cosmétique de maquillage (2) sur la première base rotative (7) autour d'un axe de rotation de préférence vertical (A), avec un dispositif de blocage (10, 21, 20) dudit produit cosmétique de maquillage, et le déplacement de l'outil de coupe (11) le long d'une trajectoire située dans un plan contenant l'axe de rotation vertical (A), sur la surface du produit cosmétique de maquillage au moins lorsque la première base rotative (7) est en rotation, de façon à travailler la surface du produit en enlevant au moins une partie superficielle de celui-ci, la trajectoire de l'outil de coupe (11) étant radiale relativement au produit cosmétique de maquillage (2) et relativement à la première base rotative (7).

4. Méthode selon la revendication 1, le produit cosmétique de maquillage (2) étant bloqué sur la première base rotative (7) par au moins un canal (19) doté d'une ouverture positionnée sur la surface de ladite première base rotative (7), et raccordé à une source de vide (20) et/ou l'ouverture du canal étant associée à un dispositif d'échantillonnage pour l'accouplement avec ledit produit cosmétique de maquillage.

5. Méthode selon la revendication 1, une deuxième base de rotation (8) étant présente pour souffler un produit cosmétique travaillé et/ou pour un deuxième travail de celui-ci et/ou la rotation de la première base rotative (7) étant synchronisée avec la rotation de la deuxième base de rotation (8).

6. Méthode selon la revendication 1, le produit cosmétique de maquillage (2) étant déplacé par une bande transporteuse de chargement (4) et par une bande transporteuse de déchargement (5), et par un dispositif de positionnement (32A, 32B, 32C, 30, 33) dudit produit cosmétique capable de déplacer le produit cosmétique au moins entre la bande transporteuse de chargement (4), la première base rotative (7), et la bande transporteuse de déchargement (5).

7. Méthode selon la revendication 6, ledit dispositif de positionnement comprenant trois dispositifs de manutention (32A, 32B, 32C), chacun étant fixé sur un élément transversal commun (30) et comprenant trois doigts mobiles (33) pour saisir le produit cosmétique de maquillage (2).

8. Méthode selon la revendication 6, la bande transporteuse de chargement (4) étant associée avec un plan de chargement muni de fenêtres (40) permettant aux doigts mobiles (33) de saisir le produit cosmétique.

9. Méthode selon la revendication précédente, un dispositif d'aspiration forcée, agencé au-dessus de la première base rotative (7), étant mis en place pour aspirer la poussière de cosmétique produite au cours du travail.

10. Produit cosmétique réalisé avec la méthode selon la revendication 1 ou 2, présentant, sur sa surface, une cannelure dont la profondeur crête-creux est comprise entre 30 et 60 µm, et dans lequel une telle cannelure présente une forme spiralée et/ou la surface du produit cosmétique étant couverte de façon homogène par de telles cannelures.
